(19) Europäisches Patentamt
European Patent Office
Office européen des brevets

(11) EP 1 206 085 B1

(12) EUROPEAN PATENT SPECIFICATION

(45) Date of publication and mention of the grant of the patent:
**07.09.2005 Bulletin 2005/36**

(51) Int Cl.[7]: **H04L 12/56**, H04L 12/24, H04Q 11/04

(21) Application number: **01250392.6**

(22) Date of filing: **08.11.2001**

(54) **Method and apparatus for automated service level agreements**

Verfahren und Vorrichtung für automatische Dienststufenübereinkommen

Méthode et dispositif pour s’accorder automatiquement sur des niveaux de service

(84) Designated Contracting States:
**AT BE CH CY DE DK ES FI FR GB GR IE IT LI LU MC NL PT SE TR**

(30) Priority: **08.11.2000 US 246788 P**

(43) Date of publication of application:
**15.05.2002 Bulletin 2002/20**

(73) Proprietor: **Infonet Services Corporation,
A California Corporation
California 90245 (US)**

(72) Inventor: **Varsano, Shlomo
Los Angeles, California 90024-5557 (US)**

(74) Representative: **Müller, Wolfram Hubertus et al
Patentanwälte
Maikowski & Ninnemann,
Postfach 15 09 20
10671 Berlin (DE)**

(56) References cited:
**EP-A- 0 786 883 WO-A-00/51292**

- **"ATM Forum Performance Testing Specification" ATM FORUM, [Online] - 31 October 1999 (1999-10-31) pages 1-99, XP002233315 Mountain View Retrieved from the Internet: <URL:ftp://ftp.atmforum.com/pub/approved-specs/af-test-tm-0131.000.pdf> [retrieved on 2003-03-03]**
- **I. KORPEOGLU, S. TRIPATHI: "Estimating End-to-End Cell Delay Variation in ATM Networks" ICCT, 22.-24.10.1998, [Online] - 24 October 1998 (1998-10-24) pages 1-20, XP002233316 Bejing Retrieved from the Internet: <URL:http://citeseer.nj.nec.com/cache/papers/cs/9664/http:zSzzSzwww.cs.umd.eduzSzuserszSzkorpezSzpublicationszSzcdv.pdf/estimating-end-to-end.pdf> [retrieved on 2003-03-03]**
- **ITU-T: "Internet Protocol data communication service - IP packet transfer and availibility performance parameters" ITU-T, SERIES I: INTEGRATED SERVICES DIGITAL NETWORKS, [Online] - 28 February 1999 (1999-02-28) pages 1-26, XP002233317 Geneva Retrieved from the Internet: <URL:http://www.ihserc.com/cgi-bin/dodiss2?j_201=86380153460000082845800470753013040 27400015541608509814746012318j_27=4&j_25=5 &j_200=vpdf&j_89=search_results&sess=76284823&prod=SPECS2&acct=5920606100&j_99=GTPIJ AAAAAAAAAAA&j_121=ITU-T%2BY.1540&j_122=1> [retrieved on 2003-03-03]**
- **NETWORK WORKING GROUP: "Framework for IP Performance Metrics" RFC 2330, [Online] - 31 May 1998 (1998-05-31) pages 1-40, XP002233318 Retrieved from the Internet: <URL:http://www.ietf.org/rfc/rfc2330.txt?number=2330> [retrieved on 2003-03-03]**

EP 1 206 085 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

- **NETWORK WORKING GROUP: "A One-Way Delay Metric for IPPM" RFC 2679, [Online] - 30 September 1999 (1999-09-30) pages 1-20, XP002233319 Retrieved from the Internet: <URL:http://www.ietf.org/rfc/rfc2679.txt?number=2679> [retrieved on 2003-03-03]**

## Description

### BACKGROUND OF THE INVENTION

Communications and data Network Service providers (NSPs) are system integrators who provide their customers both network components and the expertise to integrate these network components into a complete network solution. In many cases, a NSP offers to provide a network to a customer wherein the network must meet customer specified performance criteria. The obligations of the NSP to meet the customer specified performance criteria are included in a Service Level Agreement (SLA).

NSPs compete with each other for customers by offering network solutions that meet a customer's specifications at the lowest possible cost. A SLA usually contains a minimum level of performance as measured against customer specified performance criteria for a given network. A NSP usually accepts the risk of the network falling below the minimum level of performance. A NSP therefore attempts to propose a network that will operate above the minimum level of performance specified in the SLA without designing a network that is too expensive to be acceptable to the customer.

A SLA is a form of traffic contract that guarantees a particular level of service for a given price. The primary difference between a SLA and a normal ATM traffic contract is that a SLA has a tariff that stipulates the NSP is able to test and verify that the NSP is delivering contracted levels of service. Any number of Quality of Service (QoS) parameters can be contained in the SLA, including terms for supporting multiple classes of service.

At present, a NSPs Service Level Agreement SLA delays typically are estimated by a adding a constant delay margin (fixed value, e.g., 20 msec. or a proportional margin, e.g., 20% of round trip delay) to measured PING samples. This practice exposes NSPs to two risks: if actual performance were poorer than SLA estimates then the NSP may be vulnerable to SLA violations; and if actual performance is better than the SLA estimates, then the published SLA performance may not be competitive.

In order to support a NSP's SLA verification for network services, the NSP should develop a scientific and methodical approach for managing a network. A management system should also allow the simultaneous verification of SLAs for multiple classes of service over the entire network. Once a network is in place, a NSP may retain operational control of the network to the extent necessary to monitor the performance of the network. The NSP would like to know if the performance of the network is such that the network may fall below the minimum level of performance as specified in the SLA before the network actually does so. Furthermore, in both the design and operation of a network, a NSP needs a way to accurately predict the performance of a network without actually inducing a controlled or experiencing an uncontrolled network failure. The present invention meets such need.

Document "ATM Forum Performance Testing Specification", ATM Forum [Online] - 31 October 1999 (1999-10-31) pages 1-99, XP002233315 Mountain View, Retrievable from the Internet: <URL:ftp://ftp.atmforum.com/pub/approved-specs/af-test-tm-0131.000.pdf> describes performance testing in ATM networks with the measurement of the level of quality of a system under test or an implementation under test under well-known conditions. The level of quality is expressed in the form of metrics such as latency, end-to-end delay and effective throughput. It is described, among others, in chapters 3.1 and 3.2 the generation of network delay samples and in appendix C the generation of a service level agreement delay value on the basis of the network delay samples in accordance with statistical principals.

I. Korpeoglu, S. Tripathi: 'Estimating End-to-End Cell Delay Variation in ATM Networks', ICCT, 22.-24.10.1998, [Online] -24 October 1998 (1998-10-24) pages 1-20, XP002233316 Bejing, Retrievable from the Internet: <URL:http://citeseer.nj.nec.com/cache/papers/cs/9664/http:zSzzSzwww.cs.umd.eduzSzuserszSzkorpezSzpublicationszSzcdv.pdf/estimating-end-to-end.pdf>, describes estimating end-to-end cell delay variation in ATM networks as one of the quality of service parameters that can be negotiated between applications and an ATM network. Section 3 of this document mentions that the end-to-end cell delay variation may be calculated as the sum of individual local cell delay variations along a path from a source to a destination. The accumulated cell delay variation is passed from one switch to another as a parameter in the SETUP message of the signaling protocol.

### SUMMARY OF THE INVENTION

The present invention is directed to a method for estimating the quality of service of communication paths between two points of a multi-node network by sampling at multiple times during a given period of time transmission delays of trunks in each path that connect the two points. The method comprises the steps of: determining from said samples a busy period of each path; deriving from said samples a mean delay value for each trunk during the busy period; summing the mean delay values of the trunks comprising each path to produce a path delay; and adding the path delay to a path standard error to produce a total delay value.

Preferred embodiments of the invention are identified in the subclaims.

BRIEF DESCRIPTION OF THE DRAWINGS

These and other features, aspects, and advantages of the present invention will become better understood with regard to the following description and accompanying drawings where:

FIG. 1 is a diagram of an embodiment of a network performance monitor in accordance with the present invention;
FIG. 2 is a block diagram of an exemplary automated service level agreement delay generator in accordance with the present invention;
FIG. 3 is a network diagram depicting a path with multiple trunks through an exemplary network;
FIG. 4 is a process flow diagram of a statistical analysis process for an automated service level agreement delay generator in accordance with the present invention;
FIG. 5 depicts an exemplary set of delay data for a single trunk's delays;
FIG. 6 is a pseudocode listing describing an exemplary busy period determination process in accordance with the present invention;
FIG. 7 depicts pseudocode for a standard deviation generation process for trunks within a path in accordance with the present invention;
FIG. 8 is an illustration of the relationship between a path delay, a confidence interval, and a SLA delay for a network wherein observed traffic delays can be described by a Gaussian distribution;
FIG. 9 is a block diagram of an exemplary process for generating a trunk SLA delay value for a new trunk in accordance with the present invention;
FIG. 10 is a process flow diagram for an exemplary system for a network delay performance system in accordance with the present invention;
FIG. 11 is a block diagram of an exemplary coefficient of variation alert generator in accordance with the present invention;
FIG. 12 is a hardware architecture diagram of a general purpose computer suitable for generation of SLA delays or use as a host for a network delay performance system in accordance with the present invention; and
APPENDIX A is a pseudocode listing for exemplary network data analysis processes in accordance with the present invention.

DETAILED DESCRIPTION

FIG. 1 is a diagram of an embodiment of a network performance monitor in accordance with the present invention. Remote distributed testing (RDT) test systems 10, 12, 14, 16, and 18 are used to monitor a network 30. A plurality of test systems are installed at switching centers 20, 22, 24, 26, and 28 within the network. The test systems are controlled from one or more remote control centers 32. The multiple test systems can be combined logically to operate as a single unit, regardless of the geographic distances between them. The resulting virtual test system allows test engineers to perform multipoint network tests. Test traffic is generated and routed on demand between any two switching centers within in the network. The virtual test system allows all personnel who monitor the network performance to be located at a Network Operations Center (NOC) 34. The distributed test system is programmed to generate test traffic to determine if an individual switching center's policing mechanism is handling excess traffic correctly. This includes determining if nonconforming data packets are discarded or tagged when the traffic contract is violated and if conforming traffic is allowed to pass freely through the switching center. Network probes (not shown) hosted by the test systems combine the functionality of a protocol analyzer and transmission monitor. The network probes generate large volumes of data that can easily exceed the memory capacity of a network probe. Therefore, a centralized database 36 is used to collect and aggregate data from all the network probes. The aggregate data includes delay data collected for transmission delays experienced by test traffic routed through the network.
A generation of a minimum performance level for the network is accomplished by reading the delay data 38 collected from the network probes and performing a statistical analysis of the delay data in an automated SLA generation process 44. A minimum performance level in the form of an estimated delay 40 for a data packet transmitted through the network is generated along with an assessment of the risk 42 of exceeding the estimated delay by the automated SLA delay generator.
FIG. 2 is a block diagram of an exemplary automated service level agreement delay generator in accordance with the present invention. The automated SLA delay generator includes a statistical analysis process 200. The statistical analysis process receives a set of network delay data 38 for a network. The statistical analysis process also receives a selected length of a busy period 202 and a data sample rate 204. The statistical analysis process uses the set of delay data, selected length of busy period, and sample rate to generate a delay standard deviation 206 and a path delay 208 for a path through the network.
The automated SLA delay generator further includes a a distribution model 209 describing the statistical distribution of the delay data that includes a sample error generator. The automated SLA delay generator receives a selected confidence level 212 and uses the selected confidence level, the standard deviation of path delay, and the distribution model to generate a confidence interval 214, such as a sample error. The sample error is added 216 to the sample mean of the path delay to generate a SLA delay for the path 218. The automated SLA delay generator further includes a risk generator 219 to generate a risk of exceeding the SLA delay for the path 220 using the selected confidence level.

FIG. 3 is a network diagram depicting a path with multiple trunks through an exemplary network. The network includes a plurality of edge switches 302, 304, 306, and 308. The network further includes a plurality of core switches 310, 312, and 314. The switches are connected to each other via trunks 316, 318, 320, 322, 324, 326, and 328. While the exemplary path is shown with multiple trunks, a may include only one trunk. An exemplary path 330 through the network passes between edge switch 302 and edge switch 306 via trunk 316 to core switch 310 via trunk 324 to core switch 314 and via trunk 328 to edge switch 306. Therefore, to determine a SLA delay for the path, aggregate data including delay samples is collected and analyzed for each of the trunks included in the path.

FIG. 4 is a process flow diagram of a statistical analysis process for an automated SLA delay generator in accordance with the present invention. The statistical analysis process determines 400 a busy period of a path using a set of delay data in a to be described process. The statistical analysis process sieves 402 the set of aggregate data in a to be described process to remove unneeded trunks from the path. The data analysis process determines 404 the standard deviation and mean of the delay of each trunk in the path using the sieved set of aggregate data in a to be described process. Finally, the data process determines 406 the standard deviation and mean of the delay of a path in a to be described process.

FIG. 5 depicts an exemplary set of delay data for a single trunk's delays. Delays 504 are plotted along the Y axis 502 as determined for each time period plotted along the X axis 500. A busy period is a specific time period during which the trunk's delays are the highest as averaged over the time period. For example, the time period, or window, over which the delays are averaged is three units of time. The average value of the delays 506 is plotted at the ordinal value of the first unit of time included in the window. For the exemplary data set, the highest average delay time for a window of time is at average delay value 508. This indicates that the busy period for the exemplary data is in the window 510.

The relationship of delay samples for an entire network including a plurality of switches and trunks or hops can be described by a 3-dimensional matrix of the order m * n * p that includes scalar components. For the remainder of this discussion, an exemplary 3-dimensional matrix representation of the sample data will be used in descriptions of exemplary processes. In the exemplary 3-dimensional matrix, each element of the 3-dimensional matrix, $A_{ijk}$, is a delay sample in milliseconds where:

i = path number, with $1 \leq i \leq m$
j = hop number with $1 \leq j \leq n$
k = ordinal number of timestamp $1 \leq k \leq p$

FIG. 6 is a pseudocode listing describing an exemplary busy period determination process in accordance with the present invention, where:

$\delta$ = Sampling interval in seconds, with 300 seconds $\leq \delta \leq$ 600 seconds
$\omega$ = Number of samples per hour with $\omega = f(\delta) = (3600)/\delta$
$\Psi$ = period of averaging delay, with $1 \leq \Psi \leq 24$
$A_i$ = Intermediate aggregated delay
$B_i$ = Intermediate maximum aggregated delay
$D_i$ = Average delay for path i
$K_{max}$ = First ordinal number of timestamp of busiest hour(s) period in a 24-hour period. This value is used for computing the path-dependent standard deviation for trunks and the 95 percentile delay.

As previously described, the delay samples are stored as a 3-dimensional matrix. This matrix is scanned to determine a busy period for each path. For each path 600 in the matrix, a busy period of length $\Psi$ is determined by summing the delays in a moving time period or window of size $\omega^*\Psi$, at steps 602, 604, 606 and 608. If the sum of delays for the moving window is the greatest sum of delays seen so far, the sum of the delays is saved as the maximum summed delay 612, and the ordinal of the timestamp or time point is saved as the first ordinal of the busy period window 614. After the busy period is determined, an average delay for the busy period for the path is calculated at step 616.

When $\Psi$ is chosen such that it is less than 24 hours, the average delay is interpreted as the busy-hour delay. For example, if $\Psi$ = 1 hour, $D_i$ yields the average delay of busiest one hour in a 24-hour period; if $\Psi$ = 2 hours then $D_i$ yields the average delay of the 2 busiest-consecutive-hours in a 24-hour period; if $\Psi$ = 23 hours $D_i$ yields the average

delay of the 23 busiest-consecutive-hours in a 24-hour period; and when $\Psi$ = 24 hours] $D_i$ yields the average 24-hour delay in a 24-hour period.

Referring again to FIG. 4, a statistical analysis process further includes a data sieve process 402 for sieving of undesirable delay paths such as intra-site paths, equal-delay path, and paths that were formed as a consequence of a network failure and produce long delays. An exemplary data sieving process in accordance with the present invention uses a route tree to describe the path. The route tree may be described as a two-dimensional matrix with scalar elements, subscripted with 'x' for path number and 'y' for hop number such that $N_{xy}$ designates a unique node.

Each trunk within a path operates in full duplex mode and the route tree lists traceroutes in both directions of the path. For example, delay in the direction from $N_{1l}$ to $N_{1p}$ is designated $B_i^*$ and delay in the direction from $N_{1p}$ to $N_{1l}$ is designated $B_i^-$. The following pseudocode describes a data sieving process as used by an exemplary data sieve process in accordance with the present invention:

1. Remove delay values for paths containing two nodes AND these two nodes are located in the same site (e.g., node LAX1 and node LAX2. The result is delays of trunks within a hub are eliminated),
2. Remove delay values for $B_i^+$ if $B_i^+ \geq B_i^-$. For each edge switch pair, one of two paths with the higher delay is eliminated and also the edge switch pair with equal delay is eliminated. Edge switch pairs with higher delays are eliminated to exclude paths that were formed because of a network failure and those with asymmetric routes.
3. Remove delay values for $B_i^-$ if $B_i^- \geq B_i^+$.

An exemplary statistical analysis process further includes a trunk standard deviation process 404 for generating trunk delays and standard deviations for trunks within paths. The trunk delay standard deviation that is computed for each trunk is path-dependent. The standard deviation for any specific trunk may vary from one path to another because a first ordinal number of timestamp for a busiest period is determined by total path delay, not individual trunk delay. For example, a trunk may carry network traffic for two different paths, path 1 and path 2. Each of the paths may have a terminus in a separate city with each city in a different time zone. In this case, the busy period for path 1 will be different than that for path 2. In this case, the trunk delay is calculated for each of the path's busy periods.

A standard deviation of a mean is given by:

$$\sigma = \{ (1/(n-1)) [\sum_{i=1}^{n} (x_i - \mu)^2 ] \}^{1/2}$$

Where:

$\sigma$ = Standard Deviation (milliseconds)
n = Number of samples
$x_i$ = Delay of sample i, (milliseconds)
$\mu$ = Average delay (milliseconds)

FIG. 7 depicts pseudocode for a standard deviation generation process for trunks within a path in accordance with the present invention. For each path as determined at step 700, and for each hop as determined at step 702, an average delay is calculated for the path's previously described busy period at steps 704 and 706. Once the average delay for the path's busy period is determined, the standard deviation is calculated at steps 710 and 712.

Referring again to FIG. 4, a statistical analysis process in accordance with the present invention further includes a path delay standard deviation process 406 for generating a delay and standard deviation for a path. An exemplary path delay and standard deviation process in accordance with the present invention receives the standard deviations for the trunks within a path. The path delay standard deviation process uses the standard deviations of the trunks within a path to generate a standard deviation for the path. The standard deviation for a path is generated from the individual trunk standard deviations by taking the square root of the sum of the squares:

$$\sigma_{path} = \{\sigma_{Trunk1}^2 + \sigma_{Trunk\ 2}^2 + ... + \sigma_{\ Trunk\ N}^2)\}^{1/2}$$

Where:

$\sigma_{path}$ = Standard Deviation of the path delay, milliseconds
$\sigma_{Trunki}$ = Standard Deviation of a trunk i, milliseconds

Referring again to FIG. 2, an automated service level agreement delay generator further includes a delay distribution model 209. The delay distribution model includes a statistical function describing the distribution of the delay samples taken from the network. The delay distribution model is used to determine the upper bound of the confidence interval using a selected confidence level 212 and a standard deviation of a path 206. In one embodiment of a delay distribution model in accordance with the present invention, the delays are modeled as having an assumed Gaussian distribution. The confidence interval is calculated by:

$$\text{Confidence Interval} = Z * \frac{\sigma_{path}}{(3600/\delta)^{1/2}}$$

Where:

Z = Variable of the Error Function, erf Z
erf Z = Error Function
1 - a = User input confidence coefficient (= 2 * erf Z)
$\sigma_{path}$ = Standard deviation of delay samples per path
$\delta$ = Sampling interval

Z is taken from the following lookup table:

| **1 - α Confidence Level**Z | **Z** |
|---|---|
| 90% | 1.645 |
| 91% | 1.695 |
| 92% | 1.751 |
| 93% | 1.812 |
| 94% | 1.881 |
| 95% | 1.960 |
| 96% | 2.054 |
| 97% | 2.170 |
| 98% | 2.326 |
| 99% | 2.576 |
| 99.9% | 3.291 |
| 99.99% | 3.891 |

In other embodiments of delay distribution model in accordance with the present invention, the distribution of the delays is modeled using other forms of error functions. In these embodiments, a different lookup table is used to calculate the confidence interval.

Once the path delay 208 and the confidence interval, for example the sample error, have been determined, they are combined 216 to produce a SLA delay 218.

The selected confidence level determines the risk of violating a SLA by having traffic on the network experience delays in excess of the SLA delay. FIG. 8 is an illustration of the relationship between a path delay, a confidence interval, and a SLA delay for a network. Delay values are plotted along the X axis 800 and the number of observed delay samples with a specific delay value are plotted along the Y axis. The distribution of the delay samples is shown as a distribution curve 804. A path delay value 806 is shown at the center of the distribution curve. The magnitude of the confidence interval is shown as an offset 808 from the path delay. Combining the path delay and the confidence interval creates a SLA delay 810. Note that some of the observed delays 812 fall above the SLA delay value. The risk of an observed delay value falling above the SLA delay value is evaluated by (100 - Confidence Level)/2.

The SLA delay value is used to write SLAs with a known level of risk. For example, if it is determined that the path delay between city A and city B is 300 mSec with a 30 mSec standard deviation, then the SLA delay time at a 95% confidence level is (300 mSec + 1.960 * 30 mSec) or 358.8 mSec. At a 95% confidence level, 95% of all observed delays will fall within the range of 241.2 mSec to 358.8 mSec with a 2.5% probability of an observed delay falling below 241.2 mSec and a 2.5% probability that an observed delay will fall above 358.8 mSec. This means that 97.5% of all observed delays will be less than or equal to 358.8 mSec. Put another way, the risk of an observed delay exceeding 358.8 mSec is 2.5%.

FIG. 9 is a block diagram of an exemplary process for generating a trunk SLA delay value for a new trunk in accordance with the present invention. Because of the typically low utilization of a new trunk, there is a need to simulate delay for that trunk as if it were moderately utilized to avoid an SLA delay value that is too low. This low SLA delay value may result in SLA violations when utilization increases. New trunk SLA delays can be extrapolated from a fixed delay from contiguous trunk delay measurements for a short time T (for example, one hour during very low traffic activity and when delay variation is expected to be relatively low). Link utilization on a first day 900, link utilization on a second day 902, mean delay for the first day 904, and mean delay for the second day 906 are used to generate a fixed delay 910 using a delay equation 908. The delay equation is as follows:

$$\text{Fixed Delay} = \tfrac{1}{2}[D1 + D2 - TS(\frac{U1}{1\text{-}U1} + \frac{U2}{1\text{-}U2})]$$

Where:

D1 = Average delay for period of time T on day 1
D2 = Average delay for period of time T on day 2
U1 = Average link utilization for period of time T on day 1
U2 = Average link utilization for period of time T on day 2
TS = Serialization delay for link

The fixed delay is used along with a desired link utilization value 912, and a bandwidth value for the new trunk 914, and a queuing model 916 to generate a SLA delay for a new trunk.

FIG. 10 is a process flow diagram for an exemplary system for a network delay performance system in accordance with the present invention. For each functional block in the process flow diagram, a corresponding algorithm detailed in Appendix A is referenced. For example, functional block 1002 references algorithm No. 1 found in Appendix A. The network delay performance system is used to monitor the performance of a network. The performance of the network is monitored by generating a baseline of trunk and path delay values that are compared to daily trunk and path delay values. Additionally, a metric comparing the standard deviation of a delay value with the delay to generate a dimensionless measure of network stability is used to detect network delay variability that may indicate network problems. The network delay performance system receives a set of delay samples 1000 from a network. The network delay performance system analyses the set of delay samples in order to monitor the network's performance. The network delay performance system includes a previously described busy period process L002 for determining a busy period and average delay for the busy period of a path through the network using the set of data delay samples. The network delay performance system further includes a previously described data sieving process 1004 for elimination of unnecessary trunks from the path. The output of the data sieving process is used in a previously described standard deviation for trunks process 1006 to determine the standard deviation of the mean delay of each trunk in the path. The network delay performance system further includes a previously described standard deviation for paths process that uses the trunks' standard deviations to determine the standard deviation of the path.

The network delay performance system also monitors the performance of the network at the trunk level. The set of delay samples is used to generate trunk statistics in much the same way as path statistics are generated. The network delay performance system further includes a busy period and trunk delay process 1012 for detection of a trunk's busy period and calculation of the mean delay for the trunk at the trunk's busy period. The algorithm used is similar to the algorithm used to determine a path's busy period and mean delay and is fully detailed in APPENDIX A. The network delay performance system further includes a standard deviation for trunks process 1014 for the determination of the standard deviation of the mean delay for each trunk during the trunk's busy period. This process is similar to the previously described standard deviation for trunks in a path process 1006 however the trunk's busy period is used rather than a path's busy period. The complete algorithm is presented in APPENDIX A.

A path's and a trunk's mean delays and standard deviations of the mean delays are analyzed by a percentile delay and Coefficient of Variation (CoV) process 1010 for determinine the percentile path delay for the nine busiest consecutive delay hours in a 24-hour period and a percentile trunk delay for the nine busiest consecutive delay hours in a 24-hour period for network management. The percentile delay is selected 1016 and used along with a trunk or path mean delay standard deviation to generate a CoV value and percentile delay value. These measures are used to monitor the performance of a network.

For many purposes it is convenient to express the dispersion of results in relative rather than absolute terms. The CoV is defined as the ratio of the standard deviation to the mean and is a dimensionless quantity. Even if utilization is constant and relatively low, e.g., 70% for a T1 link but the Cov of delay is relatively high, percentile delay can be three to five times the value of average delay. For many delay-sensitive customer applications, the application would tear down the connection (time out) if percentile delay exceeds the threshold of the application timer, i.e., keepalive timer, for maintaining the session. The variability of the response time is an important statistic since a highly variant response time may result in unnecessary retransmissions. For example, the measurement and monitoring of the CoV of delay is important for voice over ATM services. Mean delay may be within the acceptable bounds but if the CoV of delay is high, the Mean Opinion Score (MOS) of voice services may be unacceptable. Therefore, CoV is a useful metric for monitoring the performance of trunks under load for delay sensitive applications including voice and video. Video broadcast services can tolerate relatively large delays but delay variation is not tolerable. Average delay is not a good indicator for gauging quality of links for voice over ATM, instead, percentile delay may be monitored. The network delay performance system includes a CoV alert generator 1018 for generation of CoV alerts.

The 95th percentile delay is a well-defined- and widely recognized metric. The 95th percentile is a value that only 5% of delay samples exceed. Also, the value of samples will be less than the 95th percentile 95 percent of the time. Percentile delay serves as the benchmark for the upper bound of delay above which performance of multimedia applications is unacceptable. Therefore, 95th-percentile delay can serves as one of the components for capacity management. Capacity management denotes the problem of ensuring that the currently available network resources are used to provide the highest performance during peak traffic. Peak traffic can be defined as the 95-percentile delay. Also, Some NSPs establish the 95-percentile delay as threshold of sustainable delay for network trunks in order to maximize bandwidth usage.

The 95 percentile delay is produced for the total population of traffic for the nine busiest consecutive hours in a 24-hour period for each trunk and path using a lookup table. The CoV is given by:

$$\text{CoV} = \frac{\sigma_{\text{path}}}{\text{average delay for samples of nine busiest consecutive hours in a 24-hour period}}$$

The CoV is then used in a look up table to determine a value to multiply by the path average delay to generate a percentile delay. An exemplary 95th percentile delay look up table is as follows:

| | | | | | |
|---|---|---|---|---|---|
| CoV --> | 0.01 | 0.03 | 0.05 | 0.07 | 0.09 |
| Ratio --> | 1.015 | 1.045 | 1.08 | 1.115 | 1.15 |
| CoV --> | 0.11 | 0.13 | 0.15 | 0.17 | 0.19 |
| Ratio --> | 1.185 | 1.22 | 1.255 | 1.295 | 1.33 |
| CoV --> | 0.21 | 0.23 | 0.25 | 0.27 | 0.29 |
| Ratio --> | 1.365 | 1.405 | 1.44 | 1.48 | 1.515 |
| CoV --> | 0.31 | 0.33 | 0.35 | 0.37 | 0.39 |
| Ratio --> | 1.555 | 1.595 | 1.635 | 1.675 | 1.715 |

Once the Ratio is determined from the lookup table and the CoV, the $95^{th}$ percentile is given by: $95^{th}$ Percentile delay = average delay for samples of nine busiest consecutive hours in a 24-hour period * Ratio].

FIG. 11 is a block diagram of an exemplary CoV alert generator in accordance with the present invention. The CoV alert generator 1102 receives a CoV value 1100. The CoV alert generator generates CoV alerts 1104, 1106, and 1108 using the CoV value and a set of selected thresholds. When volatility of delay is low ($\text{CoV} \leq 0.1$) mean delay that is affected by utilization is the significant indicator of trunk performance. When the CoV is high ($\text{CoV} > 1$), percentile delay becomes the significant indicator of trunk performance. In an embodiment of a CoV alert generator in accordance with the present invention, CoV thresholds are set as follows:

| Alert Stage | CoV | Percentile Delay |
|---|---|---|
| Critical | 2.0 | 4.8 x mean delay |
| Major | 1.0 | 3.0 x mean delay |
| Minor | 0.5 | 1.9 x mean delay |

Referring again to FIG. 10, the network delay performance system further includes a previously described upper bound of confidence interval process 1020. The upper bound of confidence interval process generates confidence intervals for both trunks and paths using a path or trunk mean delay and standard deviation, confidence coefficient 1022, and confidence coefficient vs. Z lookup table 1024. The confidence intervals are used in a busy period path delay process 1026 and a busy period trunk delay process 1028 to determine the busy period delays for both paths and trunks. The algorithm for calculating a busy period delay is similar to the previously described SLA delay generation process. The confidence interval of the average delay for a path's or trunk's busy period is added to the average delay for a path's or trunk's busy period. A pseudocode listing is provided for each process in APPENDIX A.

The path and trunk busy period delays are tracked by a monthly delay baseline network management process 1030. The path and trunk busy period delays are stored in a database. Baseline values are generated and reported in order to track the performance of a monitored network over time. The baseline process collects daily average values of busy period delay for one calendar month, computes the 95 percentile of daily delay values, and stores the 95 percentile values. The process is repeated on a monthly basis. A pseudocode listing for this process is included in APPENDIX A.

The network delay performance system further includes a daily delay vs. baseline exceptions reporting process 1032. In this process, daily path and trunk delays are compared to baseline delays to detect critical network performance problems. For each city pair, a daily delay value is compared with a delay value of the delay baseline of the previous month. If the daily delay value exceeds the delay baseline of the previous month by a threshold amount, then a report 1034 is generated detailing the excessive daily delay. A pseudocode listing for this process is included in APPENDIX A.

FIG. 12 is a hardware architecture diagram of a general purpose computer suitable for generation of SLA delays or use as a host for a network delay performance system. A microprocessor 1200, including a Central Processing Unit (CPU) 1210, a memory cache 1220, and a bus interface 1230, is operatively coupled via a system bus 1235 to a main memory 1240 and an I/O interiace control unit 1245. The I/O interface control unit is operatively coupled via a I/O local bus 1250 to a disk storage controller 1295, and a network controller 1280.

The disk storage controller is operatively coupled to a disk storage device 1225. Computer program instructions 1297, stored in storage device 1225 for generation of SLA delays or implementation of a network delay performance system are stored on the disk storage device. The microprocessor retrieves the computer program instructions and stores them in the main memory. The microprocessor then executes the computer program instructions stored in the main memory to implement the features of a SLA delay generator or a network delay performance system.

Although this invention has been described in certain specific embodiments, many additional modifications and variations would be apparent to those skilled in the art. It is therefore to be understood that this invention may be practiced otherwise than as specifically described. Thus, the present embodiments of the invention should be considered in all respects as illustrative and not restrictive, the scope of the invention to be determined by any claims supportable by this application and the claims' equivalents.

## APPENDIX A

### 1 Listing of Algorithms

#### 1.1 *Computation of Busy-Hour Path Delay for Samples*

**Algorithm No. 1**

**Computation of Average Path Delay for Samples and Detection of Delay Busy-Hour Period (1 $\leq \Psi \leq$ 24 Hours)**

```
*****************************************************************************
Start
For i = 1 To m                  scan paths

    Ai = 0                      initialize Sum of Delays in Window
    Bi = 0                      initialize Maximum Sum of Delays
    Di = 0                      initialize Average Delay
    kmax = 0                    initialize first ordinal number of busiest-hour(s)-period timestamp

    For k = 1 To [(24 * 3600)/ δ] - (ω * Ψ)     ordinal number of timestamp

        For j = 1 To n                          hop number

            For h = k To [k - 1+(ω * Ψ)]

                Ai = Aijh + Ai                  add samples in ω*Ψ window.

            Next h

        Next j

        If Bi < Ai Then                         Select higher of two values.

            Bi = Ai
            Kmax = k                            Capture the first ordinal number of
                                                busiest-hour(s)-period timestamp.

        End If
        Ai = 0
    Next k

    Di = ⌈{[Bi/(ω * Ψ * i)]}⌉                   Calculate average: divide sum by
                                                number of samples and hops.
                                                Compute ceiling.
Next i
End
*****************************************************************************
```

1.2 *Data Sieving*

Algorithm No. 2

Data Sieving for Path Delay of Samples

*************************************************************************

1. Remove delay values for paths containing two nodes AND these two nodes are located in the same site (e.g., node LAX1 and node LAX2). Delay in the direction from Node11 to Node1p is designated Bi+ and delay in the direction from Node1p to Node11 is designated Bi–.

(Delays of trunks within a hub shall be eliminated, e.g., LAX1-LAX2).

1.

2. Remove delay values for $B_i^+$ if $B_i^+ \geq B_i^-$.

(For each edge node pair, the algorithm shall eliminate one of two paths with the higher delay and also eliminates the edge node pairs with equal delay. Edge node pairs with higher delay are eliminated to exclude paths that were formed due to a network failure and those with asymmetric routes.).

3. Remove delay values for $B_i^-$ if $B_i^- \geq B_i^+$.

*******************************************************************************

1.3 *Standard Deviation -* Root *Mean Square (RMS)*

**Definitions**

$S_{ij}$ = Standard Deviation of Path i, Hop j
SQRT = Square Root

**Algorithm No. 3**

**Computation of the Standard Deviation for Trunks within Paths**

```
*****************************************************************************
Start

Dij = 0                                        Initialize average busy-hour delay.
                                               for trunk

Sij = 0                                        Initialize

For i = 1 To m                                 scan paths

     For j = 1 To n                            hop number

          For k = Ki To (Ki + ω * Ψ)           Read Ki from output of Algorithm 2.

               Dij = (Dij + Aij)/(ω * Ψ)       Compute average value for busy
                                               hour.

          Next k

          For k = Ki To [Ki + (ω * Ψ)]         Read Ki from output of Algorithm 2.

               Sij = Sij + (Dij - Aij)^2

          Next k

                              Sij
          Sij = SQRT [-----------------]
                          (ω * Ψ) - 1

     Next j

Next i

End
*****************************************************************************
```

### *1.4 Computation of the Standard Deviation for a Path*

*****************************************************************************

$$\sigma_{path} = \{\sigma_{Trunk1}{}^2 + \sigma_{Trunk\,2}{}^2 + \ldots + \sigma_{Trunk\,N}{}^2)\}^{1/2}$$

*****************************************************************************

### *1.5 Computation of Busy-Hour Trunk Delay for Samples*

An explanation of the this scheme as well as a description of the relationships of data elements can be best described by a two-dimensional matrix of the order m * p that includes scalar components. There are two 2D matrices

per traffic class

| | | | |
|---|---|---|---|
| $A_{11}$<br>$A_{21}$<br>...<br>$A_{m1}$ | $A_{12}$<br>$A_{22}$<br>...<br>$A_{m2}$ | ...<br>...<br>...<br>... | $A_{1p}$<br>$A_{2p}$<br>...<br>$A_{mp}$ |

**2D Delay Matrix**

Order of matrix = m * p ≈ 5.4 * $10^3$

**Definition of Matrix Elements**

$A_{ik}$ Sample of delay value
Units [milliseconds]
Quantity Scalar
$A_{ik}$ [Delay Sample $I_i$]

i Trunk Number
Units [Dimensionless]
Domain $1 \leq i \leq m$
m ≈ 187 (e.g., assume 153 trunks per priority traffic class + 34 intra-site trunks)

k Ordinal number of timestamp
Units [Dimensionless]
Domain $1 \leq k \leq (24 * 3600)/\delta$
p = 288 ((provided for reference only, e.g., 12 samples per hour x 24 hours per day = 288 samples per 24 hours)

$\delta$ Sampling interval
Units [seconds]
Domain 300 seconds $\leq \delta \leq$ 600 seconds

$\omega$ Number of samples per Hour

$\omega$ = $f(\delta)$

$\Psi$ Period of averaging delay [Hour]
Domain $1 \leq \Psi \leq 24$
Average Arithmetic average

$A_i$ = Intermediate aggregated delay
$B_i$ = Intermediate aggregated delay
$D_i$ = Average delay for trunk I

$K_{max}$ = First ordinal number of timestamp of busiest hour(s) period in a 24-hour period. This value is required for computing the Standard Deviation for trunks and the 95 percentile delay.

**Algorithm No. 5**

Computation of Average Trunk Delay for *Samples* and Detection of Delay Busy-Hour ($1 \leq \Psi \leq 24$ Hours)

```
************************************************************************
Start

For i = 1 To m

        A_i = 0          initialize
        B_i = 0          initialize
        D_i = 0          initialize
        k_max = 0        initialize first ordinal number for the nine-busiest-consecutive -
                         hour- period timestamp

        For k = 1 To [(24 * 3600)/ δ] – (ω * Ψ)        ordinal number of timestamp

                For h = k To [k - 1 + (ω * Ψ)]

                        A_i = A_ik + A_i               add samples in ω*Ψ window.

                Next h

                        If B_i < A_i Then

                                B_i = A_i
                                K_max = k              Capture the first ordinal number of
                                                       busiest-hour(s)-period timestamp

                        End If

        Next k

        D_i = ⌈[B_i/(ω * Ψ)]⌉                          Calculate average: Divide sum by
                                                       number of samples and compute
                                                       ceiling.

Next i

End
************************************************************************
```

*1.6 Standard Deviation for Trunks*

**Algorithm No. 6**

**Computation of the Standard Deviation for Trunks Only**

```
*****************************************************************************
Start

D_i = 0            Initialize Average Delay for Busy Hour
S_i = 0            Initialize Standard Deviation for Trunk Delay

For i = 1 To m                                   scan trunks

        For k = K_i To (K_i + ω * Ψ)            Compute average value for busy
                                                 hour

                D_i = (D_i + A_i)/(ω * Ψ)

        Next k

        For k = K_i To (K_i + ωΨ)               first ordinal number of time stamp
                                                 for busy hour

                S_i = S_i + (D_i - A_i)^2

        Next k

                                S_i
        S_i = SQRT [-----------------]
                           (ω * Ψ) - 1

Next i

End
*****************************************************************************
```

*1.7 Computation of Upper Bound* of *Confidence Interval*

**Algorithm No. 7**

**Computation of Upper Bound of Confidence Interval**

*********************************************************************************

**$\delta$ = Sampling interval**

**$\sigma_{path}$ = Standard Deviation of Path Delay**

**Start**

$$\text{Upper Bound of Confidence Interval} = Z * \frac{\sigma_{path}}{(3600/\delta)^{1/2}}$$

**End**

*********************************************************************************

| Confidence Level versus variable Z | |
|---|---|
| 1-$\alpha$ Confidence Level | Z |
| 90% | 1.645 |
| 91% | 1.695 |
| 92% | 1.751 |
| 93% | 1.812 |
| 94% | 1.881 |
| 95% | 1.960 |
| 96% | 2.054 |
| 97% | 2.170 |
| 98% | 2.326 |
| 99% | 2.576 |
| 99.9% | 3.291 |
| 99.99% | 3.891 |

1.8 *Algorithm for Calculating Busy-Hour Path Delay for the Population*

Algorithm No. 8

Computation of Busy-Hour Path Delay for the *Population* of Traffic

*********************************************************************************

**Start**

**1. Calculate busy-hour path delay for samples. Reference: Algorithm 2**

**2. Calculate busy-hour path delay for the population:**

**Busy-Hour Delay for Path Samples + Upper Bound of Confidence Interval**

**End**

*********************************************************************************

1.9 *Busy-Hour Trunk Delay for Traffic Population*

**Algorithm No. 9**

**Computation of Busy-Hour Trunk Delay for the *Population* of Traffic**

***************************************************************************

**Start**

**1. Calculate busy-hour trunk delay for samples. Reference: Algorithm 5**

**2. Calculate busy-hour trunk delay for the population:**

**Busy-Hour Trunk Delay for Samples + Upper Bound of Confidence Interval**

**End**

***************************************************************************

**Algorithm No. 9 will be used for producing the delay baseline for trunks.**

1.10 *Algorithm for Calculating Percentile Delay*

Example: Calculate the 95th percentile delay

Several percentile delay lookup tables are provided for ease of calculation and for reducing calculation time: 92, 95, and 98 percentile delay. Other percentile table can be provided for any desired resolution (maximum of 14 significant figures).

The following table is presented here for demonstrating the method of calculation

| | | | | | | | | | |
|---|---|---|---|---|---|---|---|---|---|
| CoV → | 0.01 | 0.02 | 0.03 | 0.04 | 0.05 | 0.06 | 0.07 | 0.08 | 0.09 |
| Ratio → | 1.015 | 1.03 | 1.045 | 1.065 | 1.08 | 1.1 | 1.115 | 1.135 | 1.15 |
| CoV → | 0.11 | 0.12 | 0.13 | 0.14 | 0.15 | 0.16 | 0.17 | 0.18 | 0.19 |
| Ratio → | 1.185 | 1.205 | 1.22 | 1.24 | 1.255 | 1.275 | 1.295 | 1.31 | 1.33 |
| CoV → | 0.21 | 0.22 | 0.23 | 0.24 | 0.25 | 0.26 | 0.27 | 0.28 | 0.29 |
| Ratio → | 1.365 | 1.385 | 1.405 | 1.42 | 1.44 | 1.46 | 1.48 | 1.6 | 1.515 |
| CoV → | 0.31 | 0.32 | 0.33 | 0.34 | 0.35 | 0.36 | 0.37 | 0.38 | 0.39 |
| Ratio → | 1.555 | 1.575 | 1.595 | 1.615 | 1.635 | 1.655 | 1.675 | 1.695 | 1.715 |

**Part of 95 Percentile Lookup Table**

**Algorithm No. 10**

**Computation of Percentile Delay**

************************************************************************

**A. Calculate average delay for samples for the nine busiest consecutive hours in a 24-hour period. Reference: Algorithm 2.**

**B. Trunks**

**1. Standard Deviation of Delay Samples for Trunks**

**Calculate the Standard Deviation for the nine busiest consecutive hours in a 24-hour period. Reference: algorithm 6.**

**2.** $$CoV_{Trunk9B} = \frac{\sigma_{Trunk}}{\text{average delay for samples of nine busiest consecutive hours in a 24-hour period}}$$

**3.** $$CoV_{Trunk1B} = \frac{\sigma_{Trunk}}{\text{average delay for samples of busiest hour in a 24-hour period}}$$

**Note: Items B. 2. is computed for direct output report and as an intermediate step for subsequent computation. Item B. 3. is computed for a direct output report, not as an intermediate step for other computations. Reference: algorithm 5.**

**Reference: Algorithm No. 5**

**C. Paths**

**1. Standard Deviation of Paths**

**Calculate the Standard Deviation for the nine busiest consecutive hours in a 24-hour period. Reference: algorithm 4.**

$$2.\ CoV_{Path} = \frac{\sigma_{path}}{\text{average delay for samples of nine busiest consecutive hours in a 24-hour period}}$$

**Reference: Algorithm No. 2**
**Notes: 1B = Busiest Hour; 9B = Nine Busiest Hours**

**D. Look up Ratio in table, for CoV of steps B.2. and C.2. above:**

**1. Trunks**

**95 Percentile Delay of Trunks =**

$\lceil$**[average trunk delay for samples of nine busiest consecutive hours in a 24-hour period * Ratio]**$\rceil$

**2. Paths**

**95$^{th}$ Percentile Delay of Trunks =**

$\lceil$**[average path delay for samples of nine busiest consecutive hours in a 24-hour period * Ratio]**$\rceil$

**End**
**************************************************************************

1.11 *Algorithm for Establishing Delay Baseline for Network Management*

Algorithm No. 13

*****************************************************************

**Start**

1. Collect daily average values of busy-hour delay for the population for one calendar month

2. Compute the 95 percentile of daily delay values

3. Perform calculation monthly.

**End**

*****************************************************************

After this algorithm is implemented, tested, and validated, a similar or modified method can be applied to the delay baseline for SLAs.

**1.12 *Algorithm for Computing Exception* of *Delay* Values**

**Exceptions: Daily Delay vs. Baseline Delay for Network Management for Trunks and Paths)**

**Algorithm No. 14**

Exceptions: Daily Delay vs. Baseline Delay for Network Management for Trunks and Paths

*************************************************

**Start**

1. For each city pair, compare daily delay value with delay value of delay baseline

2. $$\text{Excess of Delay Ratio} = \left\lceil \left[ \frac{\text{City-Pair daily delay} - \text{baseline delay of previous month}}{\text{Baseline delay}} * 100\% \right] \right\rceil$$

3. If Excess of Delay Ratio ≥ ExceptionThreshold Then

   List traffic class, city pair, and Excess of Delay Ratio

**End**

*************************************************

**Variable: ExceptionThreshold = 20%**

**Reference: Algorithms No. 2, 5, and 13**

**1.13 *Algorithm for Computing Risk Value***

**Algorithm No. 15**

Risk value = (1 - Confidence Coefficient)/2

This is the probability of exceeding estimated delay of the traffic population.

**1.14** ***Exceptions: Coefficient of Variation of Delay for Trunks***

**Algorithm No. 16**

*****************************************************************

**Start**

**1. Compute the Coefficient of Variation of delay for each trunk (Ref: Algorithm No. 10, part 2)**

**2.**

| Condition | Result |
|---|---|
| If $0.5 \leq CoV < 1.0$ | Then CoV Alert Stage = Minor |
| If $1.0 \leq CoV < 2.0$ | Then CoV Alert Stage = Major |
| If $CoV \geq 2.0$ | Then CoV Alert Stage = Critical |

**Table 1: CoV alert conditions**

**End**

*****************************************************************

**1.15** ***Fixed Delay***

Fixed delay is the minimum possible delay along a network path, when queuing delay is not present (buffers of ATM switches are empty).

The fixed delay can be computed by extrapolating delay from delay measurements on two sequential days.

$$\text{Fixed Delay} = \tfrac{1}{2}[D_1 + D_2 - T_s(\frac{U_1}{1-U_1} + \frac{U_2}{1-U_2})]$$

where

| | |
|---|---|
| $D_1$ = | Average delay for period of time T on day 1 |
| $D_2$ = | Average delay for period of time T on day 2 |
| $U_1$ = | Average link utilization for period of time T on day 1 |
| $U_2$ = | Average link utilization for period of time T on day 2 |
| $T_s$ = | Serialization delay for link |

Measurements can be taken on consecutive dates for a period of T = 3 hours.

**Claims**

**1.** A method for estimating the quality of service of communication paths between two points of a multi-node network by sampling at multiple times during a given period of time transmission delays of trunks in each path that connect the two points, the method comprising the steps of:

determining (400) from said samples a busy period of each path;
deriving (404) from said samples a mean delay value for each trunk during the busy period;
summing (406) the mean delay values of the trunks comprising each path to produce a path delay (208); and
adding (216) the path delay (208) to a path standard error (214) to produce a total delay val ue.

**2.** The method of claim 1, in which the busy period of each path is determined by

summing (602-608) the transmission delay of the trunks in such path for a first fraction of the given period of time;
summing (602-608) the transmission delay of the trunks in such path for a second fraction of the given period of time;
comparing the first and second sum of delays;
summing (602-608) the transmission delay of the trunks in such path for a third fraction of the given period of time;
comparing the larger of the first and second sum (612) of the delays with the third sum of delays;
repeating the summing (602-608) and comparing steps for the remainder of the given period of time to derive the busy period as that fraction of time with the largest sum of delays.

**3.** The method of claim 2, in which the given period of time is 24 hours and the fraction is I hour.

**4.** The method of claim 1 or 2, in which the path standard error is derived from the samples by calculating a standard deviation (206) of each path.

**5.** The method of claim 4, in which the standard deviation of each path is derived by taking (406) the square root of the sum of squares of the standard deviations of the trunks in said path.

**6.** The method of claim 4, in which the path standard error is derived from the samples by calculating a standard deviation (206) of each path times a coefficient related to the sampling rate and a confidence factor (212).

**7.** The method of any one of claims 1 to 6, in which the samples are stored in a three dimensional matrix, where one axis is the time of the sample, a second axis is the trunk being sampled, and the third axis is the path between the two points.

## Patentansprüche

**1.** Verfahren zur Schätzung der Dienstqualität von Kommunikationswegen zwischen zwei Punkten eines Netzwerks mit mehreren Knoten durch Stichproben von Übertragungsverzögerungen von Verbindungsleitungen in jedem die beiden Punkte verbindenden Weg zu mehrerern Zeitpunkten während eines gegebenen Zeitraums, mit den folgenden Schritten:

Bestimmen (400) eines verkehrsreichen Zeitraums jedes Weges aus den Stichproben;

Ableiten (404) eines mittleren Verzögerungswerts für jede Verbindungsleitung während des verkehrsreichen Zeitraums aus den Stichproben;

Aufsummieren (406) der mittleren Verzögerungswerte der jeden Weg bildenden Verbindungsleitungen, um eine Wegverzögerung (208) zu produzieren; und

Addieren (216) der Wegverzögerung (208) zu einem Weg-Standardfehler (214), um einen Gesamtverzögerungswert zu produzieren.

**2.** Verfahren nach Anspruch 1, bei dem der verkehrsreiche Zeitraum jedes Weges folgendermaßen bestimmt wird:

Aufsummieren (602-608) der Übertragungsverzögerung der Verbindungsleitungen in einem solchen Weg für einen ersten Anteil des gegebenen Zeitraums;

Aufsummieren (602-608) der Übertragungsverzögerung der Verbindungsleitungen in einem solchen Weg für einen zweiten Anteil des gegebenen Zeitraums;

Vergleichen der ersten und zweiten Summe von Verzögerungen;

Aufsummieren (602-608) der Übertragungsverzögerung der Verbindungsleitungen in einem solchen Weg für einen dritten Anteil des gegebenen Zeitraums;

Vergleichen der größeren der ersten und zweiten Summe (612) der Verzögerungen mit der dritten Summe von Verzögerungen;

Wiederholen der Schritte des Aufsummierens (602-608) und Vergleichens für den Rest des gegebenen Zeitraums, um den verkehrsreichen Zeitraum als den Zeitanteil mit der größten Summe von Verzögerungen abzuleiten.

**3.** Verfahren nach Anspruch 2, bei dem der gegebene Zeitraum 24 Stunden beträgt und der Anteil 1 Stunde beträgt.

**4.** Verfahren nach Anspruch 1 oder 2, bei dem der Weg-Standardfehler durch Berechnen einer Standardabweichung (206) jedes Weges aus den Stichproben abgeleitet wird.

**5.** Verfahren nach Anspruch 4, bei dem die Standardabweichung jedes Weges durch Nehmen (406) der Quadratwurzel der Summe von Quadraten der Standardabweichungen der Verbindungsleitungen in dem Weg abgeleitet wird.

**6.** Verfahren nach Anspruch 4, bei dem der Weg-Standardfehler durch Berechnen einer Standardabweichung (206) jedes Weges mal einem mit der Stichprobenrate und einem Konfidenzfaktor (212) zusammenhängenden Koeffizienten abgeleitet wird.

**7.** Verfahren nach einem der Ansprüche 1 bis 6, bei dem die Stichproben in einer dreidimensionalen Matrix gespeichert werden, wobei eine Achse die Zeit der Stichprobe, eine zweite Achse die Verbindungsleitung, von der eine Stichprobe genommen wird, und die dritte Achse der Weg zwischen den beiden Punkten ist.

## Revendications

**1.** Procédé pour estimer la qualité de service de chemins de communication entre deux points d'un réseau à plusieurs noeuds en échantillonnant à plusieurs moments pendant une période de temps donnée des retards de transmission de tronçons de chaque chemin qui relie les deux points, le procédé comprenant les étapes consistant à :

déterminer (400) à partir desdits échantillons une période occupée de chaque chemin ;
dériver (404) desdits échantillons une valeur de retard moyenne pour chaque tronçon pendant la période occupée ;
additionner (406) les valeurs de retard moyennes des tronçons comprenant chaque chemin pour produire un retard de chemin (208) ; et
ajouter (216) le retard de chemin (208) à une erreur standard de chemin (214) pour produire une valeur de retard totale.

**2.** Procédé selon la revendication 1, dans lequel la période occupée de chaque chemin est déterminée par

la somme (602-608) du retard de transmission des tronçons d'un tel chemin pour une première fraction de la période de temps donnée ;
la somme (602-608) du retard de transmission des tronçons d'un tel chemin pour une deuxième fraction de la période de temps donnée ;
la comparaison des première et deuxième sommes de retards de transmission ;
la somme (602-608) du retard de transmission des tronçons d'un tel chemin pour une troisième fraction de la période de temps donnée ;
la comparaison de la plus grande des première et deuxième sommes (612) des retards avec la troisième somme des retards ;
la répétition des étapes de somme (602-608) et de comparaison pour le reste de la période de temps donnée afin de dériver la période occupée en tant que fraction de temps par rapport à la somme de retards la plus importante.

3. Procédé selon la revendication 2, dans lequel la période de temps donnée est de 24 heures et la fraction est de 1 heure.

4. Procédé selon la revendication 1 ou 2, dans lequel l'erreur standard de chemin est dérivée à partir des échantillons en calculant une déviation standard (206) de chaque chemin.

5. Procédé selon la revendication 4, dans lequel la déviation standard de chaque chemin est dérivée en prenant (406) la racine carrée de la somme de carrés des déviations standard des tronçons dudit chemin.

6. Procédé selon la revendication 4, dans lequel l'erreur standard de chemin est dérivée à partir des échantillons en calculant une déviation standard (206) de chaque chemin fois un coefficient lié au taux d'échantillonnage et un facteur de confiance (212).

7. Procédé selon l'une quelconque des revendications 1 à 6, dans lequel les échantillons sont stockés dans une matrice en trois dimensions, où un axe est l'heure de l'échantillon, un deuxième axe est le tronçon échantillonné, et le troisième axe est le chemin entre les deux points.

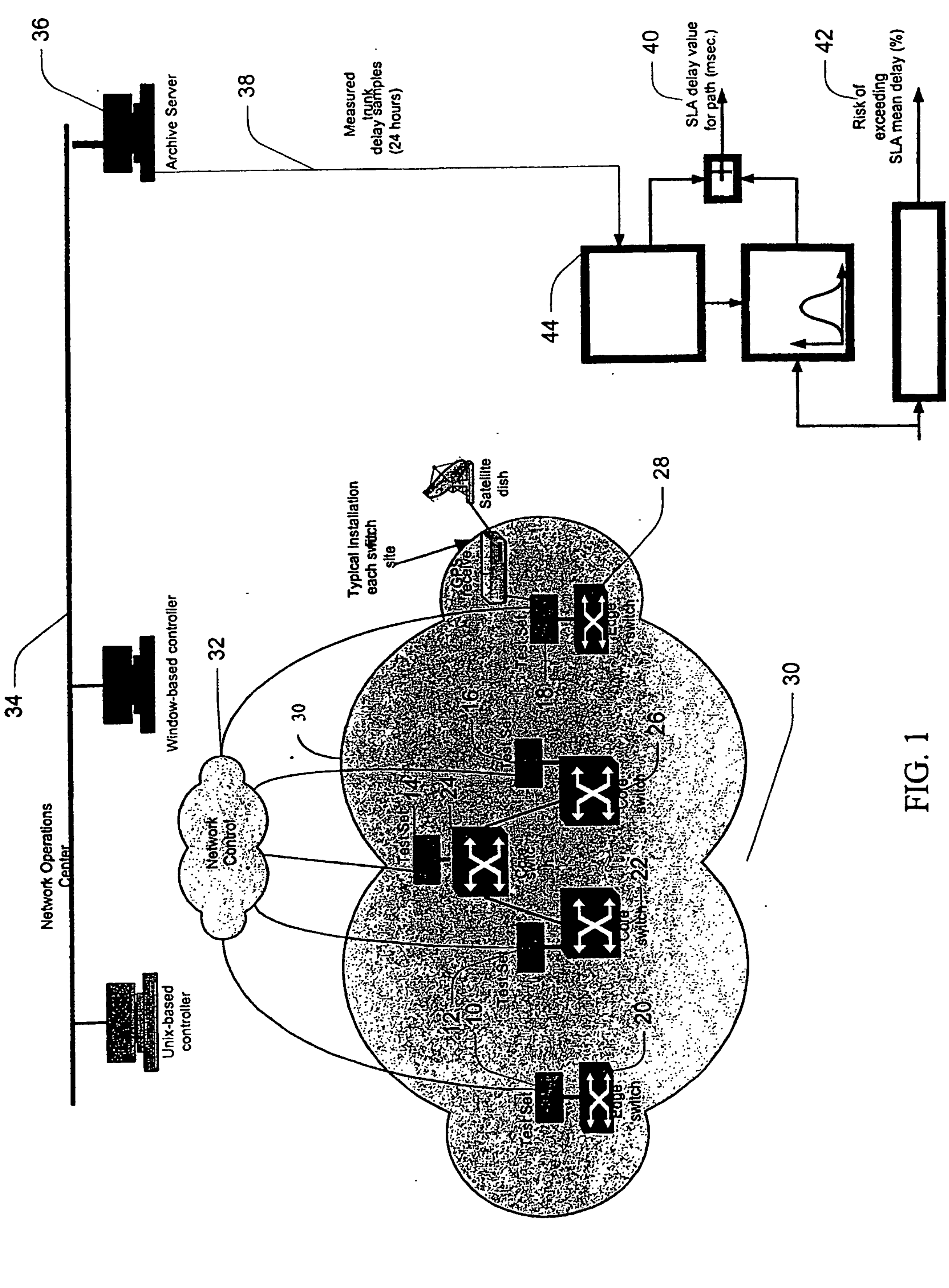
Network Operations Center
Unix-based controller
Window-based controller
Archive Server
34
36
38
Measured trunk delay samples (24 hours)
40
SLA delay value for path (msec.)
42
Risk of exceeding SLA mean delay (%)
44
32
Network Control
30
Typical installation each switch site
GPS receiver
Satellite dish
28
Test Set
Edge switch
Core switch
10
12
14
16
18
20
22
24
26

FIG. 1

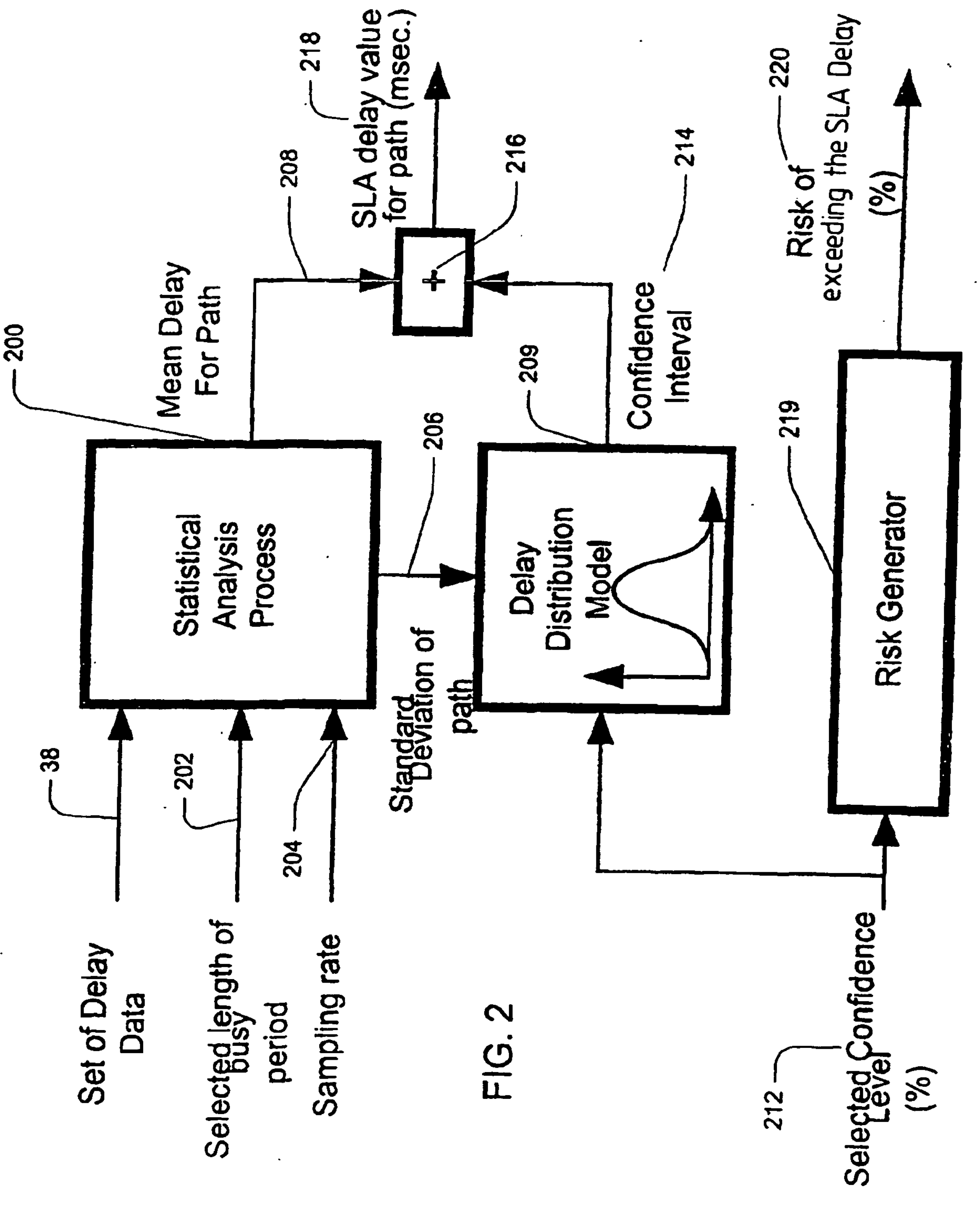
Set of Delay Data
38
Selected length of busy period
202
Sampling rate
204
Statistical Analysis Process
200
Mean Delay For Path
208
Standard Deviation of path
206
Delay Distribution Model
209
Confidence Interval
214
+
216
SLA delay value for path (msec.)
218
Selected Confidence Level (%)
212
Risk Generator
219
Risk of exceeding the SLA Delay (%)
220

FIG. 2

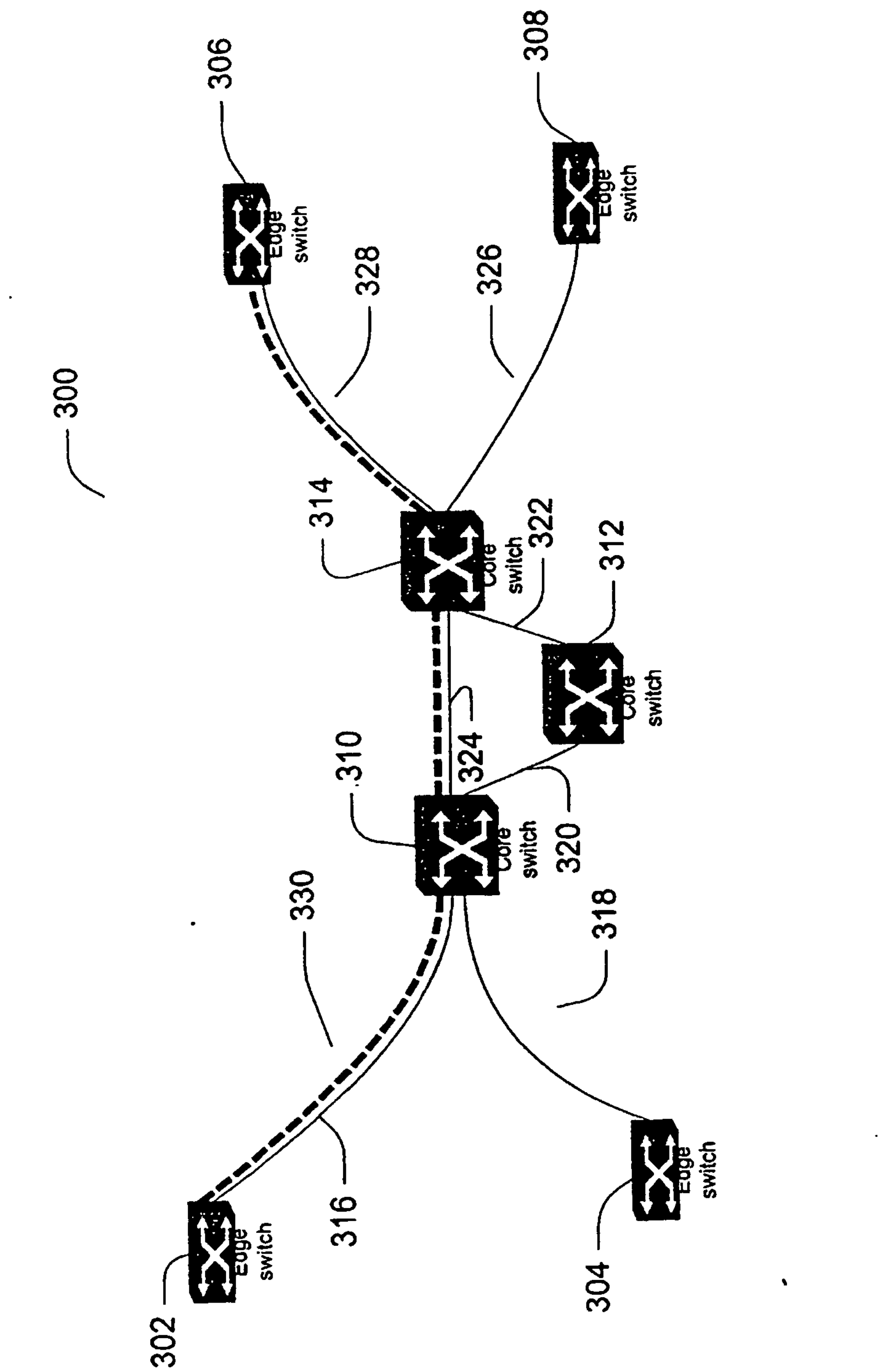
300
302
304
306
308
310
312
314
316
318
320
322
324
326
328
330
Edge switch
Edge switch
Edge switch
Edge switch
Core switch
Core switch
Core switch

FIG. 3

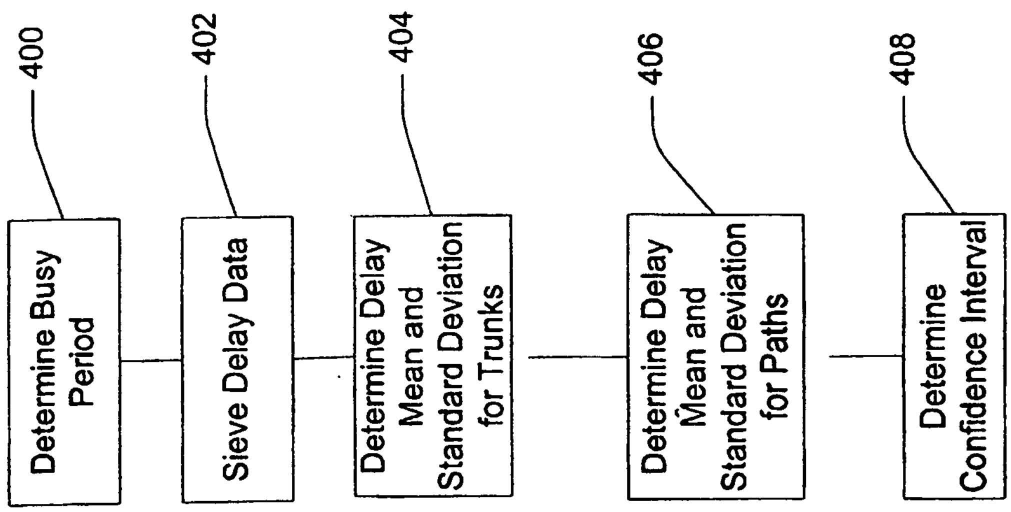
400
402
404
406
408
Determine Busy Period
Sieve Delay Data
Determine Delay Mean and Standard Deviation for Trunks
Determine Delay Mean and Standard Deviation for Paths
Determine Confidence Interval

FIG. 4

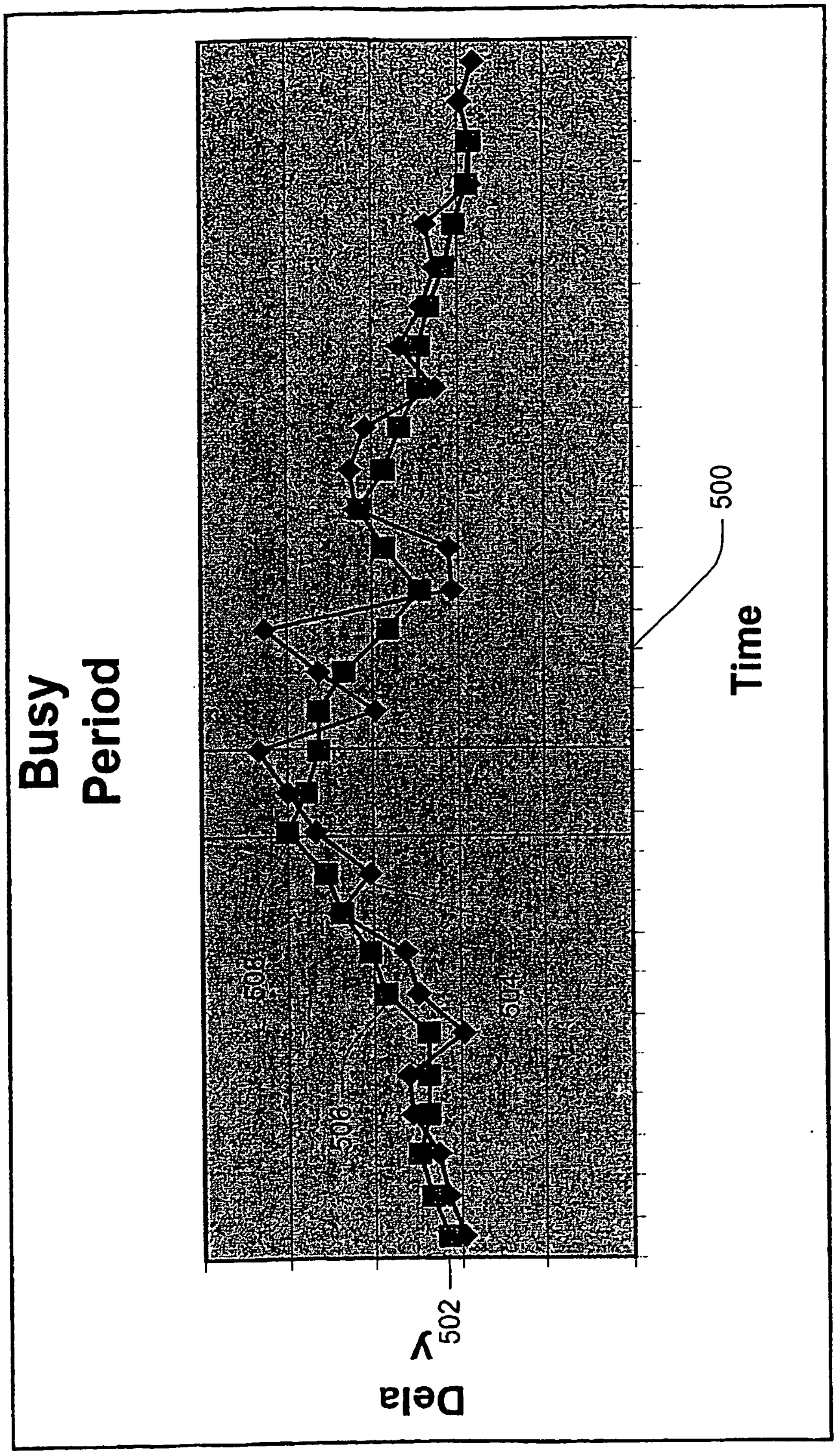


FIG. 5

```
Start                                   600
For i = 1 To m scan paths

        Ai = 0 /* Summed delay */
        Bi = 0 / *Maximum Delay /
        Di = 0 /* Average Delay During Busy Period */
        kmax - 0 /* Ordinal Value of Front of Busy Period */

For k = 1 To [(24 * 3600)/ δ] - (ω * Ψ)            602
     For j =  1 To n                               604
          For h = k To [k - 1+(ω * Ψ)]             606
               Ai = Aijh + Ai                      608
          Next h
     Next j
     If Bi < Ai Then

          Bi = Ai                                  612
          Kmax = k                                 614

     End If
     Aj =0
Next k

     Di = ⌈{[Bi/(ω * Ψ * i)]}⌉                     616
Next I
End
```

FIG. 6

Start

$D_{ij} = 0$ — *Initialize average busy-hour delay. for trunk*

$S_{ij} = 0$ — *Initialize Standard Deviation of Path i, Hop j*

For i = 1 To m — *scan paths* — 700

For j = 1 To n — *hop number* — 702

For k = $K_i$ To $(K_i + \omega * \Psi)$ — *Start at front of busy period* — 704

$D_{ij} = (D_{ij} + A_{ijk}) / (\omega * \Psi)$ — *Compute average value for busy period* — 706

Next k

For k = $K_i$ To $[K_i + (\omega * \Psi)]$ — *Start at front of busy period* — 708

$S_{ij} = S_{ij} + (D_{ij} - A_{ijk})^2$ — 710

Next k

$S_{ij} = SQRT\left[\frac{S_{ij}}{(\omega * \Psi) - 1}\right]$ — 712

Next j

Next i

End

FIG. 7

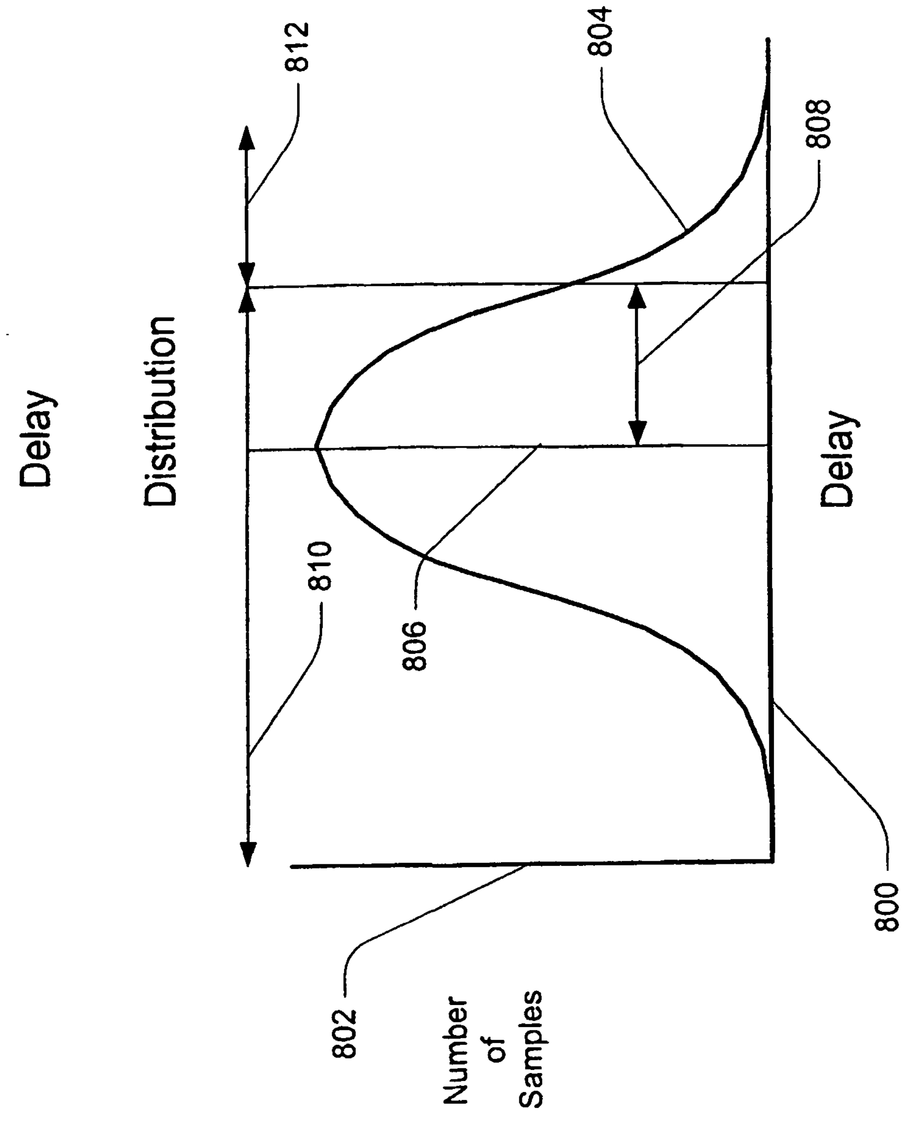
Delay
Distribution
812
804
808
810
806
Delay
802
Number
of
Samples
800

FIG. 8

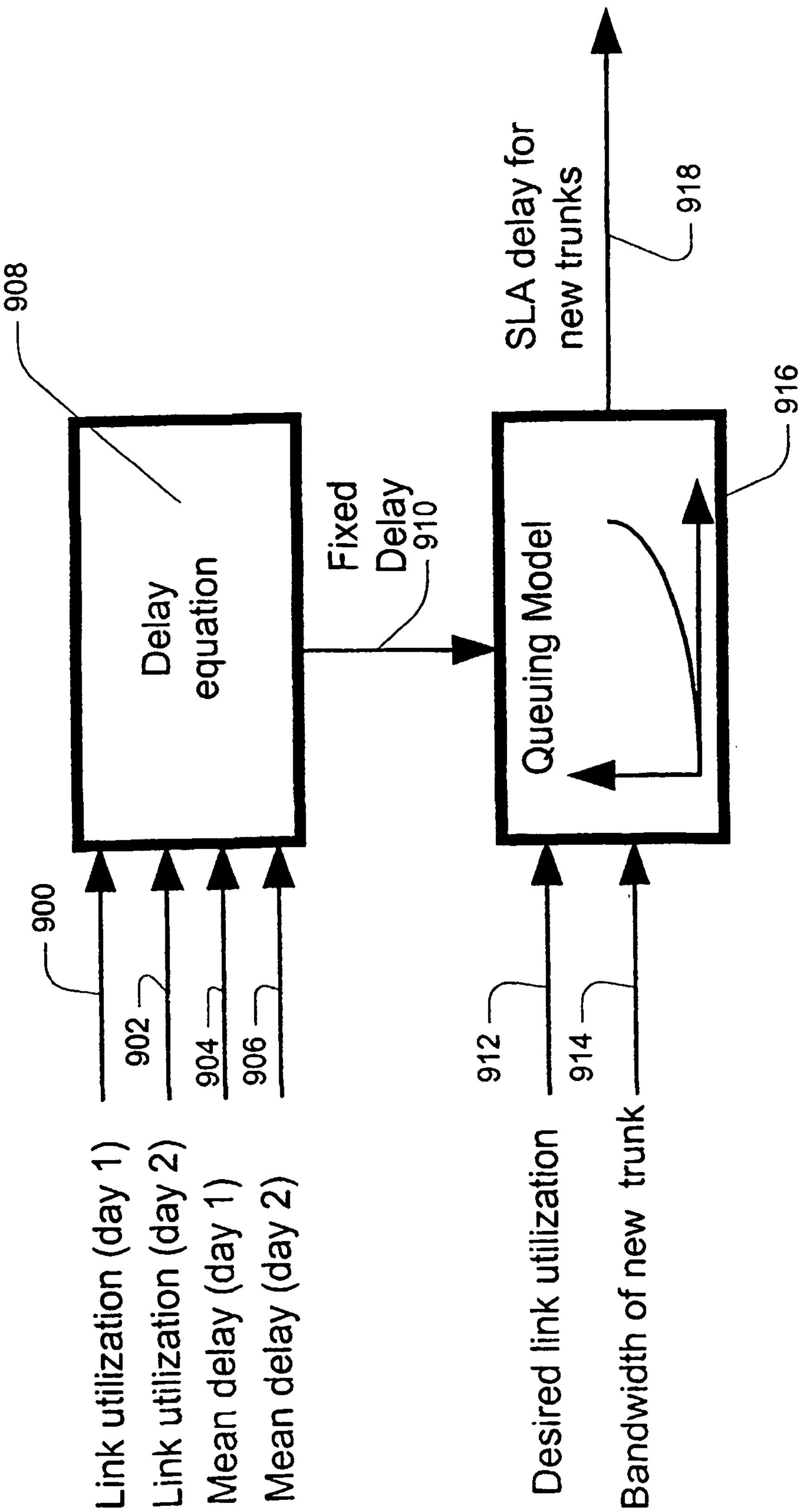
Link utilization (day 1)
Link utilization (day 2)
Mean delay (day 1)
Mean delay (day 2)
900
902
904
906
Delay equation
908
Fixed Delay
910
Desired link utilization
Bandwidth of new trunk
912
914
Queuing Model
916
SLA delay for new trunks
918

FIG. 9

FIG. 10

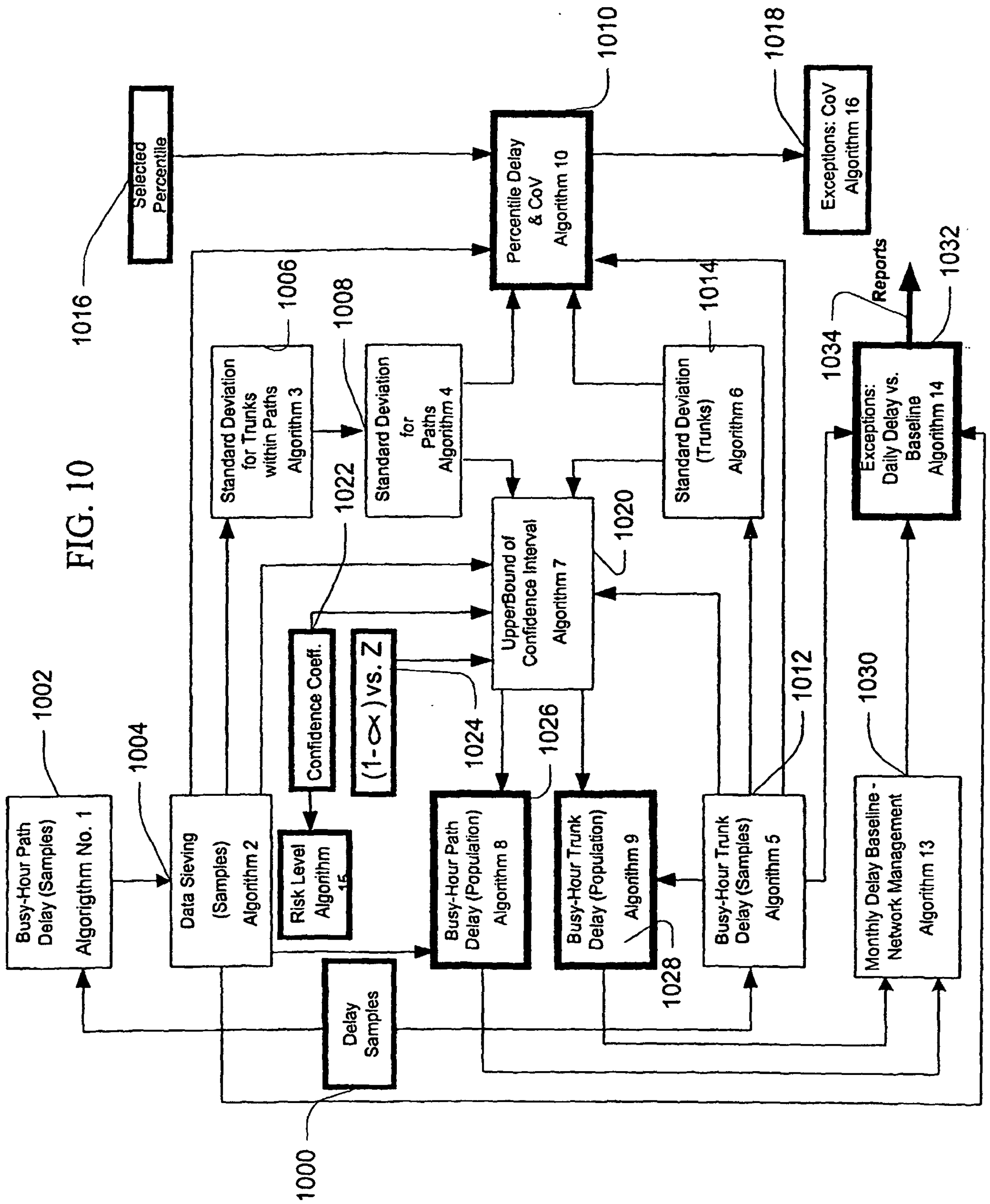
Busy-Hour Path Delay (Samples) Alogrigthm No. 1
Data Sieving (Samples) Algorithm 2
Standard Deviation for Trunks within Paths Algorithm 3
Standard Deviation for Paths Algorithm 4
Busy-Hour Trunk Delay (Samples) Algorithm 5
Standard Deviation (Trunks) Algorithm 6
UpperBound of Confidence Interval Algorithm 7
Busy-Hour Path Delay (Population) Algorithm 8
Busy-Hour Trunk Delay (Population) Algorithm 9
Percentile Delay & CoV Algorithm 10
Monthly Delay Baseline - Network Management Algorithm 13
Exceptions: Daily Delay vs. Baseline Algorithm 14
Risk Level Algorithm 15
Exceptions: CoV Algorithm 16
Selected Percentile
Confidence Coeff.
(1-α) vs. Z
Delay Samples
Reports
1000
1002
1004
1006
1008
1010
1012
1014
1016
1018
1020
1022
1024
1026
1028
1030
1032
1034

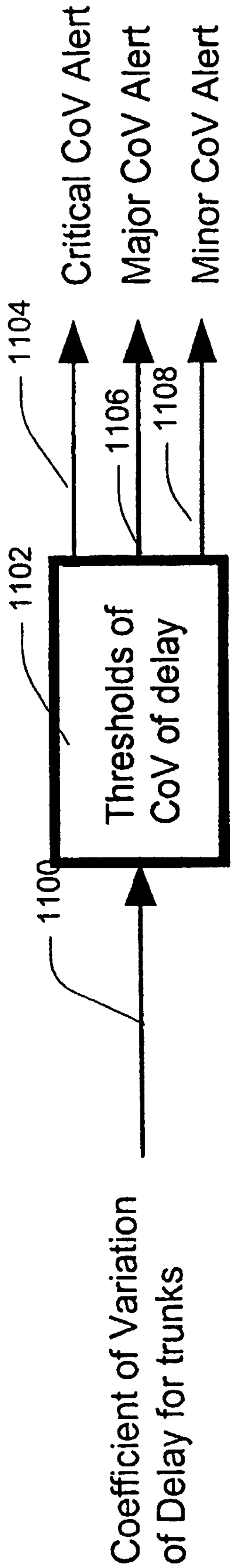
Coefficient of Variation of Delay for trunks
1100
Thresholds of CoV of delay
1102
1104
1106
1108
Critical CoV Alert
Major CoV Alert
Minor CoV Alert

FIG. 11

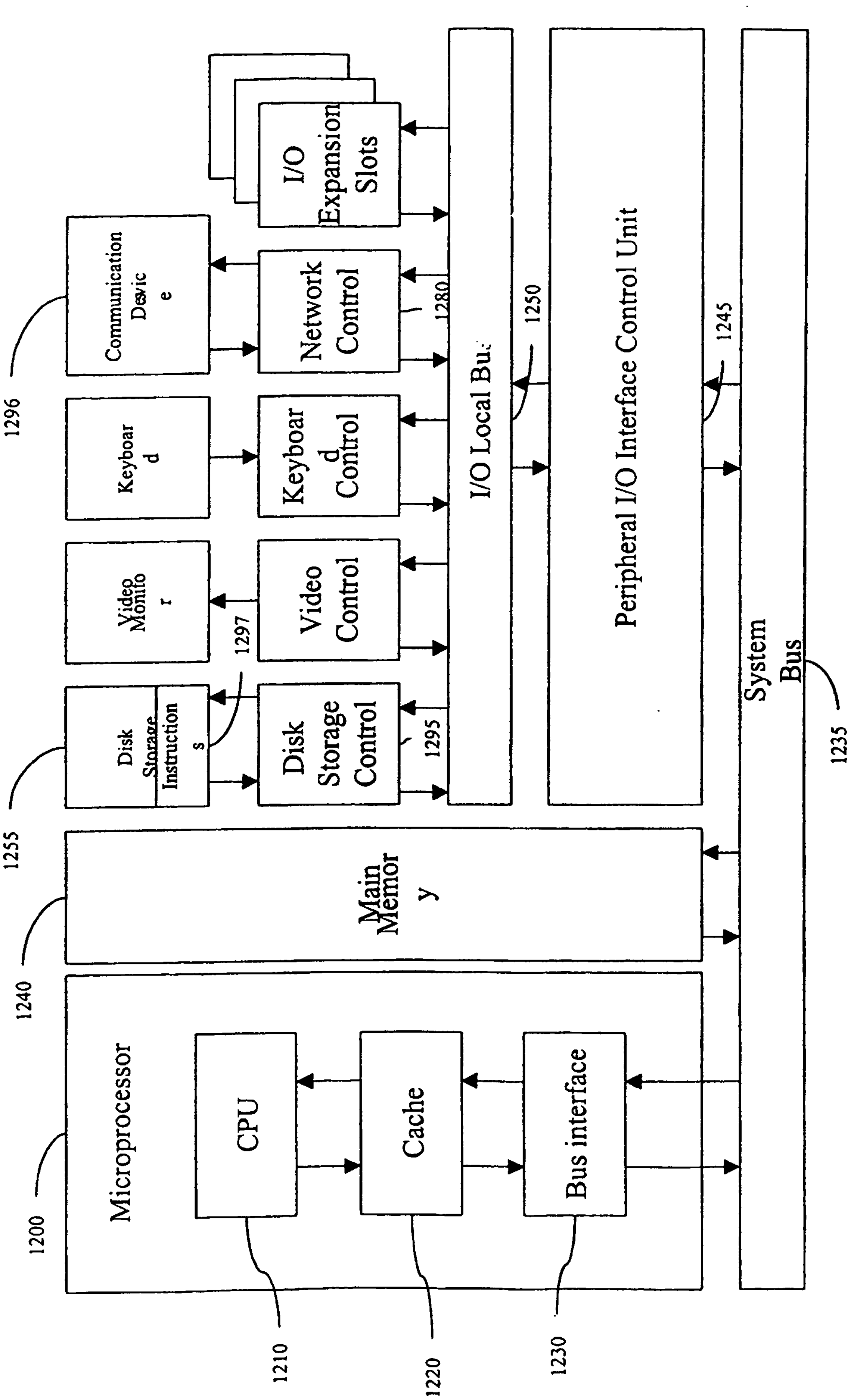
Microprocessor
CPU
Cache
Bus interface
Main Memory
Disk Storage Instructions
Disk Storage Control
Video Monitor
Video Control
Keyboard
Keyboard Control
Communication Device
Network Control
I/O Expansion Slots
I/O Local Bus
Peripheral I/O Interface Control Unit
System Bus
1200
1210
1220
1230
1235
1240
1245
1250
1255
1280
1295
1296
1297

FIG. 12